# EUROPEAN PATENT APPLICATION

(11) **EP 4 067 210 A1**
(43) Date of publication of application: **05.10.2022**
(21) Application number: 20894128.6
(22) Date of filing: 27.11.2020
(51) Int. Cl.: B62D 25/04, B62D 25/02, B62D 25/06

(54) **REINFORCING STRUCTURE FOR REAR PORTION OF VEHICLE BODY**

(30) Priority: 28.11.2019 CN 201911192175
(71) Applicant: Aiways Automobile Co., Ltd, Jiangxi 334000 (CN)
(72) Inventor: LIAO, Ying, Shangrao Jiangxi 334000 (CN)
(74) Representative: Osterhoff, Utz
(86) International application number: PCT/CN2020/132329
(87) International publication number: WO 2021/104468

(57) **Abstract**

Disclosed is a reinforcement structure for a rear of a vehicle body, including: a C-pillar upper reinforcement plate (11) and a C-pillar lower reinforcement plate (12) provided on an outer side of a C-pillar inner plate (13); an outer plate (21) of a rear wheel house; an inner plate (22) of the rear wheel house; and a reinforcement plate (5) of a shock absorber mounting plate. The C-pillar upper reinforcement plate (11) is a three-way hollow structure with three ends, a first end (111) is connected to a reinforcement plate (31) of a B-pillar upper side beam, a second end (112) is connected to an upper end of the C-pillar lower reinforcement plate (12), a third end (113) is connected to a roof rear beam (8). The C-pillar lower reinforcement plate (12) is a hollow structure, and a lower end is connected to the outer plate (21) of the rear wheel house, and is located on an extension path of the reinforcement plate (5) of the shock absorber mounting plate. The reinforcement structure meets the performance and lightweight requirements of the rear of the improved vehicle model.

## Description

### CROSS-REFERENCE TO RELATED APPLICATIONS

This application claims priority to Chinese Patent Application No. 2019111921756, filed on November 28, 2019, filed with the China National Intellectual Property Administration, and entitled "REINFORCEMENT STRUCTURE FOR REAR OF VEHICLE BODY", the entire contents of which are incorporated herein by reference.

### TECHNICAL FIELD

The present disclosure relates to the technical field of vehicle body structures, and in particular, to a reinforcement structure for a rear of a vehicle body.

### BACKGROUND

In the existing Cross (cross-platform and cross-function) and sedan model structures, the C-pillar upper reinforcement device is a two-way hollow structure or a three-way hollow structure. The two-way hollow structure has two ends. One end is connected to the rear section of the reinforcement plate of the B-pillar upper side beam, and the other end is connected to the D-pillar upper inner plate, forming an effective cavity area in the X-direction of the vehicle. The three-way hollow structure has three ends. On the basis of the two-way hollow structure, an end is added to connect the roof rear beam, thereby forming an effective cavity area in the X and Y directions of the vehicle.

Cross (cross-platform and cross-function) and sedan models are relatively low in the rear top of the vehicle body, so the Z-direction support of the whole vehicle is more important. The existing two-way or three-way hollow structure only forms an effective cross-sectional cavity in the X and Y directions of the whole vehicle, and the support for the Z direction of the whole vehicle is insufficient. The existing two-way or three-way hollow structure and other structures at the rear of the vehicle body fail to form a closed-loop force transmission path, which is not conducive to the dispersion of structural forces at the rear of the vehicle body. If other reinforcement parts are added to disperse the force, it will inevitably increase the mass of the vehicle body. Further, the force from the chassis is transmitted to the outer plate of the rear wheel house through the reinforcement plate of the shock absorber mounting plate, and the transmission path of the force begins to branch when the force is transmitted to the C-pillar upper reinforcement device. Therefore, the reinforcement plate of the shock absorber mounting plate is subjected to a large external force, which may easily lead to cracks in the welded joints between the reinforcement plate of the shock absorber mounting plate and the outer plate of the rear wheel house.

### SUMMARY

In view of the above-mentioned defects, the purpose of the present disclosure is to provide a reinforcement structure for a rear of a vehicle body to meet the performance and light weight requirements of the rear of the improved vehicle model.

The present disclosure provides a reinforcement structure for a rear of a vehicle body, including: a C-pillar upper reinforcement plate and a C-pillar lower reinforcement plate provided on an outer side of a C-pillar inner plate; an outer plate of a rear wheel house; an inner plate of the rear wheel house; and a reinforcement plate of a shock absorber mounting plate, the C-pillar upper reinforcement plate is a three-way hollow structure with three ends, a first end of the C-pillar upper reinforcement plate is connected to a reinforcement plate of a B-pillar upper side beam, a second end of the C-pillar upper reinforcement plate is connected to an upper end of the C-pillar lower reinforcement plate, a third end of the C-pillar upper reinforcement plate is connected to a roof rear beam, the C-pillar lower reinforcement plate is a hollow structure, and a lower end of the C-pillar lower reinforcement plate is connected to the outer plate of the rear wheel house, and is located on an extension path of the reinforcement plate of the shock absorber mounting plate.

In an embodiment, the third end of the C-pillar upper reinforcement plate is provided with a rear door hinge reinforcement plate.

In an embodiment, an inner side of the inner plate of the rear wheel house is provided with a reinforcement plate of the rear wheel house, and a rear seat belt lower mounting plate is provided between the reinforcement plate of the rear wheel house and the C-pillar inner plate.

In an embodiment, the rear seat belt lower mounting plate is provided outside the extension path of the reinforcement plate of the shock absorber mounting plate.

In an embodiment, the C-pillar lower reinforcement plate is located on a Y-direction extension path of the reinforcement plate of the shock absorber mounting plate.

In an embodiment, both the C-pillar upper reinforcement plate and the C-pillar lower reinforcement plate are welded on the C-pillar inner plate.

In an embodiment, the C-pillar inner plate is welded to a D-pillar upper inner plate and a connection plate at a rear of a side wall.

The benefits of the present disclosure are as follows.
1. A cavity cross-sectional structure is formed between the C-pillar upper reinforcement plate and the C-pillar inner plate, which are respectively welded with the C-pillar lower reinforcement plate, the roof rear beam and the rear section of the reinforcement plate of the B-pillar upper side beam. Therefore, the C-pillar upper reinforcement plate forms a boxed structure in the Z direction and the Y direction of the vehicle. The rigidity and modality of the structure at the C-pillar upper reinforcement plate are effectively improved, which is beneficial to the lightweight design of the vehicle body.
2. The C-pillar upper reinforcement plate is an integrally formed part of the tee joint, which can effectively reduce the cost of materials.
3. A closed-loop force transmission path is formed between the C-pillar upper reinforcement plate and the reinforcement plate of the shock absorber mounting plate, which can effectively transmit the force of the chassis and avoid the fatigue and durability problems of the vehicle body due to stress concentration.

### BRIEF DESCRIPTION OF THE DRAWINGS

FIG. 1 is a front view of a reinforcement structure according to an embodiment of the present disclosure.
FIG. 2 is sectional views taken from A-A, B-B, C-C in FIG. 1.
FIG. 3 is a top view of the reinforcement structure according to an embodiment of the present disclosure.
FIG. 4 is a sectional view taken from D-D in FIG. 3.
FIG. 5 is a side view of the reinforcement structure according to an embodiment of the present disclosure.
FIG. 6 is a rear view of the reinforcement structure according to an embodiment of the present disclosure.
FIG. 7 is a cross-sectional view of the reinforcement structure taken from E-E according to an embodiment of the present disclosure.
FIG. 8 is a schematic view of a force transmission path in the reinforcement structure according to an embodiment of the present disclosure.

### Description of reference signs

- 11: C-pillar upper reinforcement plate
- 111: first end
- 112: second end
- 113: third end
- 12: C-pillar lower reinforcement plate
- 13: C-pillar inner plate
- 21: outer plate of the rear wheel house
- 22: inner plate of the rear wheel house
- 23: reinforcement plate of the rear wheel house
- 31: reinforcement plate of the B-pillar upper side beam
- 32: rear section of B-pillar upper inner plate
- 4: rear door hinge reinforcement plate
- 5: reinforcement plate of the shock absorber mounting plate
- 6: connection plate at a rear of a side wall
- 7: D-pillar upper inner plate
- 8: roof rear beam
- 9: rear seat belt lower mounting plate

### DETAILED DESCRIPTION OF THE EMBODIMENTS

The specific embodiments of the present disclosure will be further described in detail below with reference to the accompanying drawings. These embodiments are only used to illustrate the present disclosure, but not to limit the present disclosure.

In the description of the present disclosure, it should be noted that, the orientation or positional relationship indicated by the terms "up", "down", "front", "rear", "left", "right", "inner", "outer", etc. is based on the orientation or positional relationship shown in the drawings, which is only for ease of describing the present disclosure and to simplify the description, not to indicate or imply that the referred device or element must have a particular orientation, be constructed and operate in a particular orientation, and therefore should not be construed as limiting the disclosure. Furthermore, the terms "first", "second", and "third" are used for descriptive purposes only and should not be construed to indicate or imply relative importance.

In the description of the present disclosure, it should be noted that, unless otherwise expressly specified and limited, the terms "installed", "connect" and "connected" should be understood in a broad sense, for example, which can be a fixed connection, a detachable connection, or an integral connection; which can be directly connected, or indirectly connected through an intermediate medium, and can be the internal communication between two components. For those of ordinary skill in the art, the specific meanings of the above terms in the present disclosure can be understood according to specific situations.

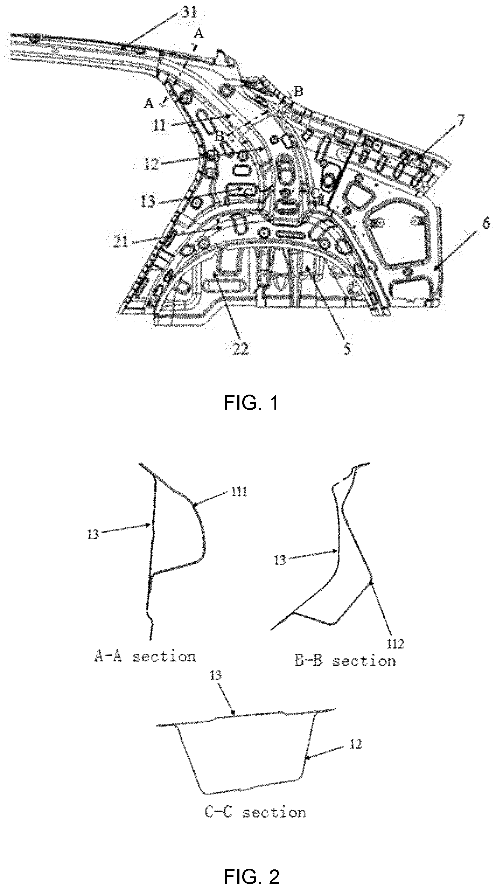

FIG. 1 shows a front view of a reinforcement structure of the present disclosure. In the following description, the drawing in FIG. 1 is used as a reference basis for directions. A left direction is perpendicular to the view outward, a right direction is perpendicular to the view inward, an up direction is upward along the view, a down direction is downward along the view, a rear direction is towards the right along the view, and a front direction is towards the left along the view. An up-down direction is a direction of Z-axis, a left-right direction is a direction of Y-axis, and a front-rear direction is a direction of X-axis. The "outer side" refers to a side where an outer plate 21 of a rear wheel house is located, and the "inner side" refers to a side where an inner plate 22 of the rear wheel house is located.

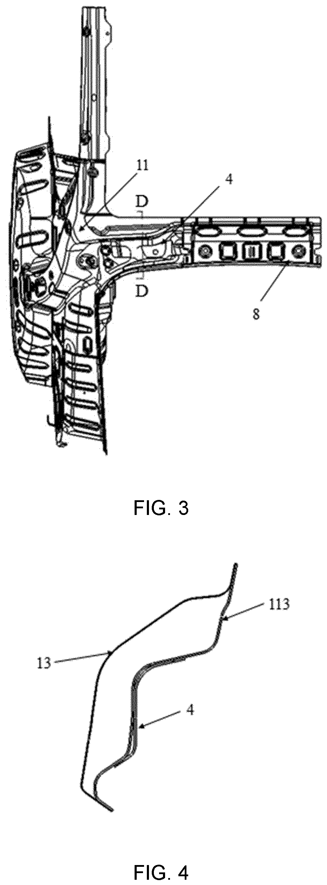

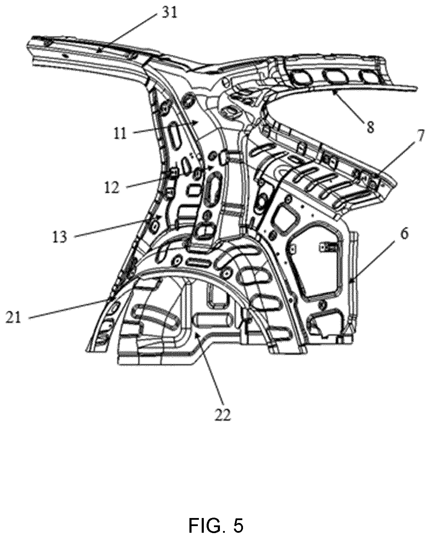

As shown in FIG. 1 to FIG. 5, the present disclosure provides a reinforcement structure for a rear of a vehicle body, which is applied to Cross models and sedan models. The reinforcement structure includes a C-pillar upper reinforcement plate 11, a C-pillar lower reinforcement plate 12, a C-pillar inner plate 13, an outer plate 21 of a rear wheel house, an inner plate 22 of a rear wheel house and a reinforcement plate 5 of a shock absorber mounting plate. The C-pillar inner plate 13 is welded to a D-pillar upper inner plate 7 and a connection plate 6 at a rear of a side wall. As a C-pillar upper end reinforcement device, the C-pillar upper reinforcement plate 11 is a three-way hollow structure, and has three ends extending in three directions respectively. A first end 111 of the C-pillar upper reinforcement plate 11 extends forward and is connected to a reinforcement plate 31 of a B-pillar upper side beam. A second end 112 of the C-pillar upper reinforcement plate 11 extends downward and is connected to an upper end of the C-pillar lower reinforcement plate 12. A third end 113 of the C-pillar upper reinforcement plate 11 extends to the right and is connected to the roof rear beam 8. A rear door hinge reinforcement plate 4 is also welded on the third end 113 of the C-pillar upper reinforcement plate 11, which provides a hinge installation hole for the rear door and meets the strength requirements of the hinge installation point. The C-pillar upper reinforcement plate 11 is welded to the outer side of the C-pillar inner plate 13, and forms a three-way cavity with the C-pillar inner plate 13. Such a hollow structure can not only increase the mode, strength and stiffness of the rear of the vehicle body, but also facilitate the transmission and dispersion of impact forces. The external force is quickly dissipated to other connecting parts through the three ends, which reduces the impact deformation on the rear of the vehicle body and prolongs the service life of the vehicle.

As a C-pillar lower end reinforcement device, the C-pillar lower reinforcement plate 12 is also a hollow structure, which is welded to the outside of the C-pillar inner plate 13 and forms a cavity with the C-pillar inner plate 13. The lower end of the C-pillar lower reinforcement plate 12 is welded on the outer plate 21 of the rear wheel house and is located on the Y-direction extension path of the reinforcement plate 5 of the shock absorber mounting plate. The "Y-direction extension path" refers to the welding connection of the C-pillar lower reinforcement plate 12 and the outer plate 21 of the rear wheel house at the projection position along the Y-direction corresponding to the reinforcement plate 5 of the shock absorber mounting plate. The C-pillar lower reinforcement plate 12 arranged in this way can not only provide Z-direction support, but also help to form a closed-loop force transmission path with the reinforcement plate 5 of the shock absorber mounting plate. In an embodiment, the reinforcement plate 5 of the shock absorber mounting plate forms a cavity structure with the outer plate 21 of the rear wheel house and the inner plate 22 of the rear wheel house, and is welded and fixed on the outer side of the inner plate 22 of the rear wheel house. The reinforcement plate 23 of the rear wheel house is welded and fixed at the corresponding position on the inner side of the inner plate 22 of the rear wheel house. The reinforcement plate 5 of the shock absorber mounting plate, the inner plate 22 of the rear wheel house and the reinforcement plate 23 of the rear wheel house are directly welded together through three-layer welding.

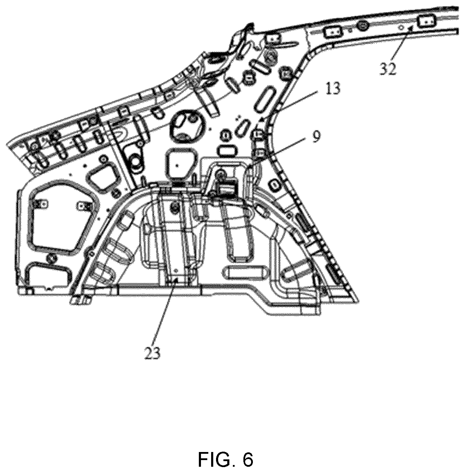

As shown in FIG. 6, a rear seat belt lower mounting plate 9 is also welded on the reinforcement plate 23 of the rear wheel house. The rear seat belt lower mounting plate 9 is welded to the inner side of the C-pillar inner plate 13, and is provided outside the extension path of the reinforcement plate 5 of the shock absorber mounting plate. This setting not only provides a safe and firm installation position for the seat belt, the force of the seat belt can also be transmitted and decomposed to the force-bearing member at the rear of the vehicle body along the arrangement path of the reinforcement plate 23 of the rear wheel house, and the force-bearing capacity of the C-pillar is also improved.

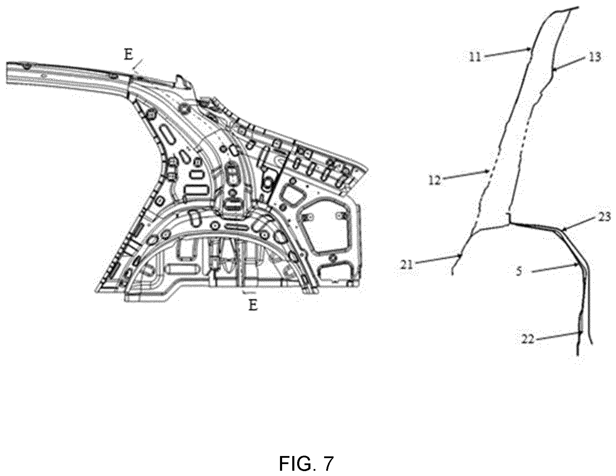

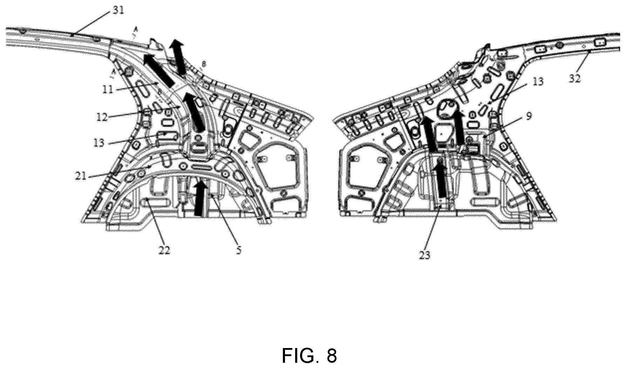

When the vehicle is moving, as shown in FIG. 7 and FIG. 8, the force transmission path of the chassis is as follows: the reinforcement plate 5 of the shock absorber mounting plate → the inner plate 22 of the rear wheel house → the reinforcement plate 23 of the rear wheel house and the rear seat belt lower mounting plate 9 → the C-pillar inner plate 13 and the outer plate 21 of the rear wheel house → the C-pillar lower reinforcement plate 12 → the C-pillar upper reinforcement plate 11 → the roof rear beam 8, the reinforcement plate of the B-pillar upper side beam 31 and the rear section 32 of the B-pillar upper inner plate. That is, a closed-loop force transmission path is formed between the C-pillar upper reinforcement plate 11 and the reinforcement plate 5 of the shock absorber mounting plate, which can effectively transmit the force of the chassis and avoid the fatigue and durability problems of the vehicle body due to stress concentration. The force transmitted to the reinforcement plate 5 of the shock absorber mounting plate will then be continuously dispersed by the various interconnected force-bearing parts, and the risk of cracking of the welding point between the reinforcement plate 5 of the shock absorber mounting plate and the outer plate 21 of the rear wheel house is greatly reduced.

In summary, the benefit of this disclosure is as follows. A cavity cross-sectional structure is formed between the C-pillar upper reinforcement plate 11 and the C-pillar inner plate 13, which are respectively welded with the C-pillar lower reinforcement plate 12, the roof rear beam 8 and the rear section of the reinforcement plate of the B-pillar upper side beam 31. Therefore, the C-pillar upper reinforcement plate 11 forms a boxed structure in the Z direction and the Y direction of the vehicle. The rigidity and modality of the structure at the C-pillar upper reinforcement plate 11 are effectively improved, which is beneficial to the lightweight design of the vehicle body. The C-pillar upper reinforcement plate 11 is an integrally formed part of the tee joint, which can effectively reduce the cost of materials.

The above are only some embodiments of the present disclosure, and it should be noted that, for those skilled in the art, without departing from the technical principles of the present disclosure, several improvements and substitutions can be made, and these improvements and substitutions should also be regarded as the protection scope of the present disclosure.

## Claims

1. A reinforcement structure for a rear of a vehicle body, comprising:
a C-pillar upper reinforcement plate (11) and a C-pillar lower reinforcement plate (12) provided on an outer side of a C-pillar inner plate (13);
an outer plate (21) of a rear wheel house;
an inner plate (22) of the rear wheel house; and
a reinforcement plate (5) of a shock absorber mounting plate,
wherein the C-pillar upper reinforcement plate (11) is a three-way hollow structure with three ends, a first end (111) of the C-pillar upper reinforcement plate (11) is connected to a reinforcement plate (31) of a B-pillar upper side beam, a second end (112) of the C-pillar upper reinforcement plate (11) is connected to an upper end of the C-pillar lower reinforcement plate (12), a third end (113) of the C-pillar upper reinforcement plate (11) is connected to a roof rear beam (8), the C-pillar lower reinforcement plate (12) is a hollow structure, and a lower end of the C-pillar lower reinforcement plate (12) is connected to the outer plate (21) of the rear wheel house, and is located on an extension path of the reinforcement plate (5) of the shock absorber mounting plate.

2. The reinforcement structure of claim 1, wherein the third end (113) of the C-pillar upper reinforcement plate (11) is provided with a rear door hinge reinforcement plate (4).

3. The reinforcement structure of claim 1, wherein an inner side of the inner plate (22) of the rear wheel house is provided with a reinforcement plate (23) of the rear wheel house, and a rear seat belt lower mounting plate (9) is provided between the reinforcement plate (23) of the rear wheel house and the C-pillar inner plate (13).

4. The reinforcement structure of claim 3, wherein the rear seat belt lower mounting plate (9) is provided outside the extension path of the reinforcement plate (5) of the shock absorber mounting plate.

5. The reinforcement structure of claim 1, wherein the C-pillar lower reinforcement plate (12) is located on a Y-direction extension path of the reinforcement plate (5) of the shock absorber mounting plate.

6. The reinforcement structure of claim 1, wherein both the C-pillar upper reinforcement plate (11) and the C-pillar lower reinforcement plate (12) are welded on the C-pillar inner plate (13).

7. The reinforcement structure of claim 1, wherein the C-pillar inner plate (13) is welded to a D-pillar upper inner plate (7) and a connection plate (6) at a rear of a side wall.
